# EUROPEAN PATENT APPLICATION

(11) **EP 0 629 359 A2**
(43) Date of publication of application: **21.12.1994**
(21) Application number: 94830223.7
(22) Date of filing: 13.05.1994
(51) Int. Cl.: A43B 7/12, A43B 9/16, B29D 31/00

(54) **Manufacturing process for the production of waterproof shoes**

(30) Priority: 16.06.1993 IT MC930047
(71) Applicant: I.MA.C. - S.R.L., I-63010 Montefiore Dell'aso (AP) (IT)
(72) Inventor: Mazzocconi, Renato, I-63010 Montefiore dell'Aso (IT)
(74) Representative: Baldi, Claudio

(57) **Abstract**

The instant invention concerns a waterproof shoe and the related manufacturing process, involving two insoles, one to be sown to the edges of the lining, and the other, outside the first insole, to be sown to the edges of the vamp; it being provided that during the moulding phase of the bottom, the polyurethane be made to pass beyond the outermost insole in order that it infiltrates, collects and consolidates between the seams of the edges of the vamp and the lining, thereby creating a perimetral surround which insulates the two seams.

## Description

The instant patent application for an industrial invention concerns a manufacturing process for the production of waterproof shoes, of the type made up of a bottom in polyurethane moulded directly onto a vamp, which is fully lined in waterproof material.

Protection provided by a patent must also extend to the shoe obtained by means of the manufacturing process according to the invention.

The aim of the instant invention is to eliminate the problems encountered in shoes of the type in question, produced by means of current manufacturing techniques, which are not able to guarantee that the shoes be totally waterproof, in spite of the fact that the material used to this end is fully water repellent.

In order to comprehend the cause of said problems, it will be necessary to describe the manufacturing process commonly used today to produce said waterproof shoes.

First of all, it should be said that a lining is sewed inside the vamp, which is made of natural or synthetic material, this lining normally being made of soft, padded material, onto which a thin layer of water repellent material is applied on the outside, this being positioned therefore between the lining and the vamp, thereby insulating the former from the latter.

The ling and the vamp thus pre-assembled are then submitted to the first processing phase, during which their lower edges, matching and one above the other, are simultaneously sewn to the edge of an insole.

Once this phase has been completed, the vamp, complete with insole, is fitted onto a metal form, which is an integral part of the equipment required for the moulding of the bottom and is of the same shape and dimensions of the foot to which the size of the fitted vamp corresponds.

The finished shoe emerges from the moulding phase, fitted with a polyurethane bottom, which incorporates the insole and surrounds the sides of the vamp perimetrally and at the base.

However, footwear manufactured in this manner is not able to guarantee that the foot is perfectly insulated against the possibility of water infiltration, in spite of the high level of water repellence of the material positioned between the lining and the vamp.

This lack of reliability is due to the fact that the vamp is sewn directly onto the insole, therefore all the dampness absorbed by the vamp can reach the inside of the shoe, through the stitching and the holes of said seam, thereby bypassing the waterproof barrier provided by the water repellent material.

The inventive idea at the basis of the manufacturing process, according to the invention, consists on the one hand, in it being provided that two insoles be used, one to be sewn to the edges of the lining, and the other outside the first insole, to be sewn to the edges of the vamp, and on the other hand, in it being provided that the polyurethane for the moulding of the bottom be made to infiltrate and consolidate between the two fixing seams of the two insoles, thereby in practice creating a perimetral insulating surround between these two seams.

For further clarity of explanation, the description of the invention continues with reference to the attached drawings, reproduced for illustrative and not limitative purposes, in which the various phases of the manufacturing process have been illustrated by means of schematic drawings, in which all the components of the shoe, vamp, lining, insole and polyurethane bottom, are always represented sectioned along a transversal plane with respect to the longitudinal direction of the shoe.

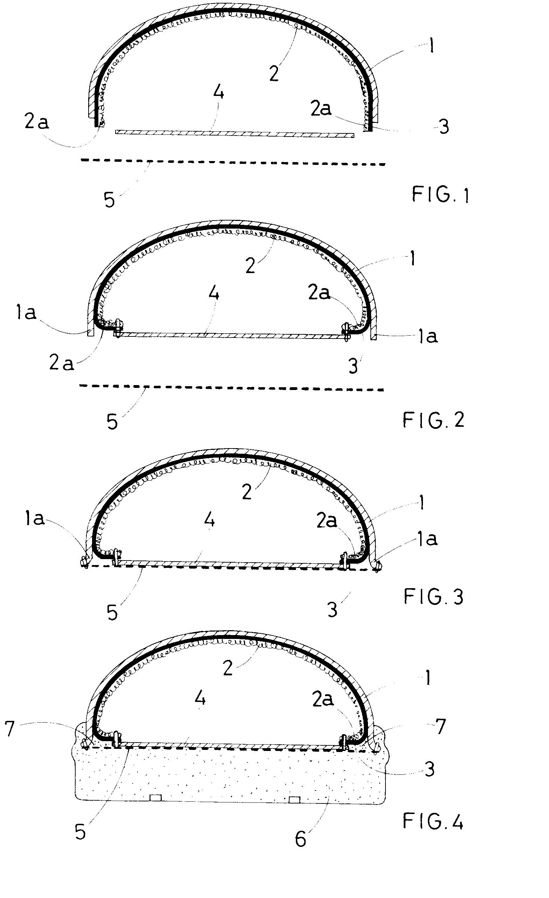

With reference to Fig.1, the vamp (1) and the inside lining (2) are represented, pre-sown together before the positioning of the water repellent material (3).

Again in Fig.1 the two insoles (4 and 5) are represented.

It should immediately be underlined that the innermost insole (4), which will eventually be sewn to the lower edges (2a) of the lining (2), can be made of leather, synthetic cardboard, or any other suitable material.

The insole (5) which will eventually be sewn to the edges (1a) of the vamp (1) must have suitable characteristics so as to ensure that during the moulding phase of the bottom, the fluid polyurethane can infiltrate between the two seams which fix the edges (1a and 2a) to the respective insoles (4 and 5).

In order to guarantee this process, the insole (5) must be made of densely perforated canvas or alternatively, of synthetic material able to melt on contact with the fluid, hot polyurethane injected into the mould.

This being said, the process according to the invention involves the following operational phases :
a) Perimetral stitching of the lower edges (2a) of the lining (2) - covered with water repellent canvas (3) - to the edge of an insole (4) ( see Fig.2 );
b) Perimetral stitching of the lower edges (1a) of the vamp (1) to the edge of an insole (5), which is perforated or made of material which melts on contact with the polyurethane injected into the mould ( see Fig.3 );
c) Moulding of the bottom in polyurethane (b) directly onto the vamp ( Fig.4 ).

It is hereby specified that the forming phase, as per point c), is carried out using traditional methods and auxiliary moulds.

As is illustrated in Fig. 4, the polyurethane passes beyond the insole (5), thereby infiltrating between the fixing seams of the edges (1a and 2a) of the vamp (1) and the lining (2), thus creating a perimetral surround (7) which insulates the two seams, and prevents the dampness absorbed by the vamp (1) from reaching the insole (4) and consequently, the foot.

In order to assist in the formation of said surround (7), the insole (4), is undersized and more precisely, not as wide as the sole (5), which is of suitable dimensions so as to match the size of shoe being manufactured.

## Claims

**1)** Manufacturing process for the production of waterproof shoes, of the type made up of a polyurethane bottom (6), moulded directly onto a vamp (1), sewn to an inside lining (2), it being provided that water repellent canvas material (3) be previously positioned in between the two, characterised by the fact that it comprises the following operational phases:
a) perimetral stitching of the lower edges (2a) of the lining (2) - covered by water repellent canvas (3) - to the edge of an insole (4);
b) perimetral stitching of the lower edges (1a) of the vamp (1a) to the edge of an insole (5), which is perforated or made of material which melts on contact with the polyurethane injected into the mould;
c) moulding of the bottom in polyurethane (6);
it being provided that during the moulding phase of the bottom (6), the polyurethane passes beyond the insole (5), infiltrating between the fixing seams of the edges (1a and 2a) of the vamp and the lining, thereby creating a perimetral surround (7), which insulates the two seams.

**2)** Manufacturing process for the manufacture of waterproof shoes, according to the previous claim, characterised by the fact that in a preferred form of embodiment, the insole (4) is undersized, and precisely, not as wide as the sole (5), which is of suitable dimensions to match the size of shoe being manufactured.

**3)** Waterproof shoe, of the type made up of a polurethane bottom (6), moulded directly onto a vamp (1), sewn onto an inside lining (2), water repellent canvas material (3) having previously been positioned in between the two, characterised by the fact that it is manufactured according to the process described in the previous claims.
